# EUROPEAN PATENT SPECIFICATION

(11) **EP 1 275 546 B1**
(45) Date of publication and mention of the grant of the patent: **01.12.2004**
(21) Application number: 02015185.8
(22) Date of filing: 08.07.2002
(51) Int. Cl.: E04H 15/06, B60P 3/34, B60J 11/00

(54) **Device for driving curtains mounted on motor vehicles and the like**
Vorrichtung für angetriebene Vorhänge angeordnet an einem Kraftfahrzeug oder dergleichem
Dispositif pour rideaux motorisés sur véhicules à moteur et similaires

(30) Priority: 10.07.2001 IT MI20011474
(43) Date of publication of application: 15.01.2003
(73) Proprietor: 3B Fabbrica Tende S.R.L., 25080 Prevalle (BS) (IT)
(72) Inventor: Magri, Giovanni, 25135 Brescia (IT)
(74) Representative: Cicogna, Franco

(56) References cited:
- EP-A- 0 454 933
- EP-A- 0 881 117
- DE-A- 2 839 557
- DE-A- 3 909 937

## Description

### BACKGROUND OF THE INVENTION

The present invention relates to a device for driving curtains mountable on motor vehicles and the like, according to the preamble of independent claim 1.

As is known, on commercial use motor vehicles are frequently applied box assemblies for holding therein folded curtains, which, for use, are opened so as to provide a broad covered space on the front, on the side and the rear of the motor vehicle.

To that end, curtains have been already specifically designed comprising oleodynamically driven devices for performing the typical movements necessary to extend and fold again the curtains, that is the overturning or tilting of the curtain box, the opening of the curtain box cover, and the extending of the folded curtains.

A drawback of the prior art approaches is that the oleodynamically operated devices are driven by electric apparatus which are coupled to the motor vehicle battery supply.

Thus, if one of the above mentioned devices does not proper operate, or if the motor vehicle battery is not sufficiently charged, that it is not possible to properly operate the curtains, with the related difficulties.

The document EP 0881117 discloses a curtain driving device according to the preamble of claim 1.

### SUMMARY OF THE INVENTION

Accordingly, the aim of the present invention is to overcome the above mentioned drawbacks, by providing a driving device for driving and handling curtains mounted on motor vehicles and the like, allowing to adjust or control at will the curtain opening step, thereby easily fitting all the contingent use applications.

Within the scope of the above mentioned aim, a main object of the present invention is to provide such a driving device which, in a case of a failure of conventional driving or operating devices, allows to operate with one of a plurality of outer elements adapted to control the curtain movements.

Another object of the present invention is to provide such a driving device which, owing to its specifically designed constructional features, is very reliable and safe in operation.

Yet another object of the present invention is to provide such a curtain driving device which can be easily made and which, furthermore is very competitive from a mere economic standpoint.

According to one aspect of the present invention, the above mention aim and objects, as well as yet other objects, which will become more apparent hereinafter, are achieved by a driving device for driving curtains according to claim 1.

### BRIBF DESCRIPTION OF THE DRAWINGS

Further characteristics and advantages of the present invention will become more apparent hereinafter from the following detailed disclosure of a preferred, though not exclusive, embodiment of a driving device for driving curtains mounted on motor vehicles and the like, which is illustrated, by way of an indicative, but not limitative, example, in the accompanying drawings, where:

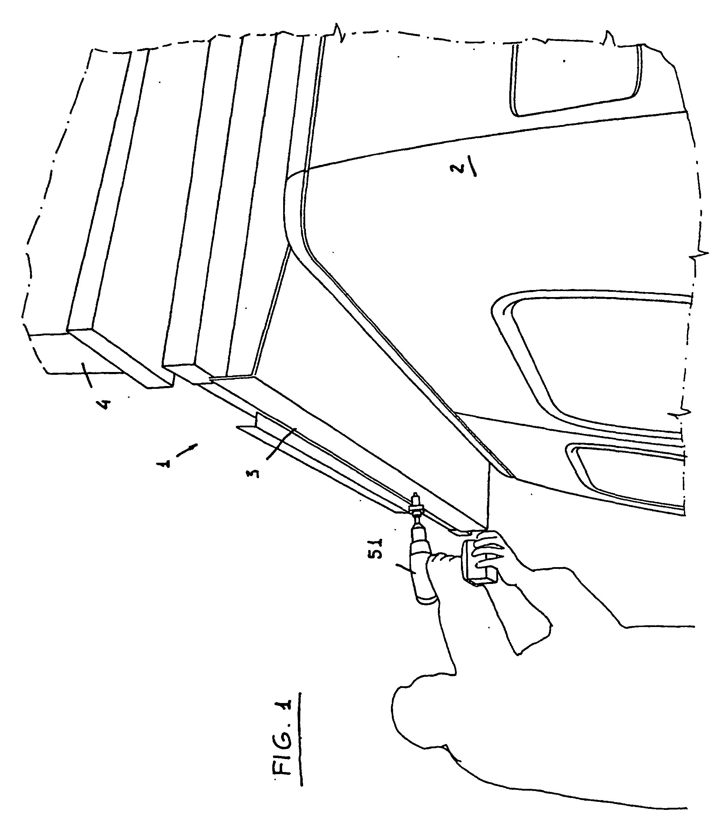

Figure 1 is a schematic view illustrating the curtain operation step, performed by an outer control device designed for controlling the overturning movement of the curtain box;

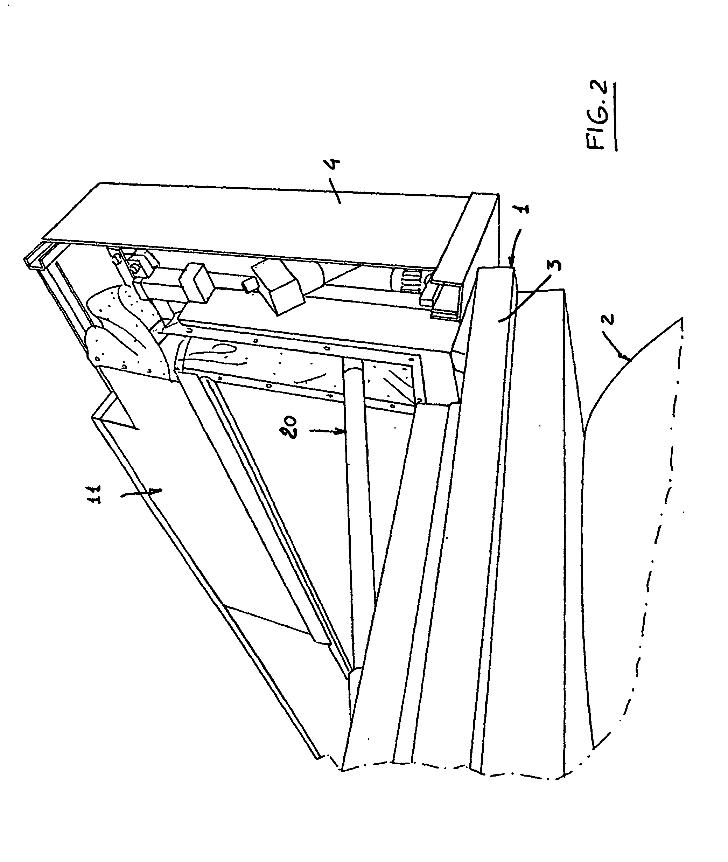

Figure 2 is a schematic perspective view illustrating the curtain box in an overturned condition, ready for starting the opening of the curtain;

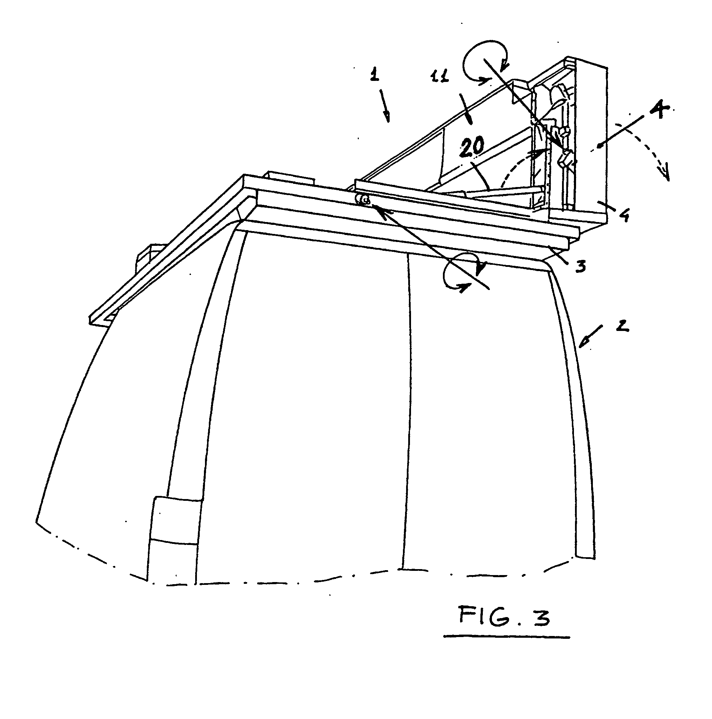

Figure 3 is a further schematic perspective view illustrating the overturned box, before starting the box cover opening step;

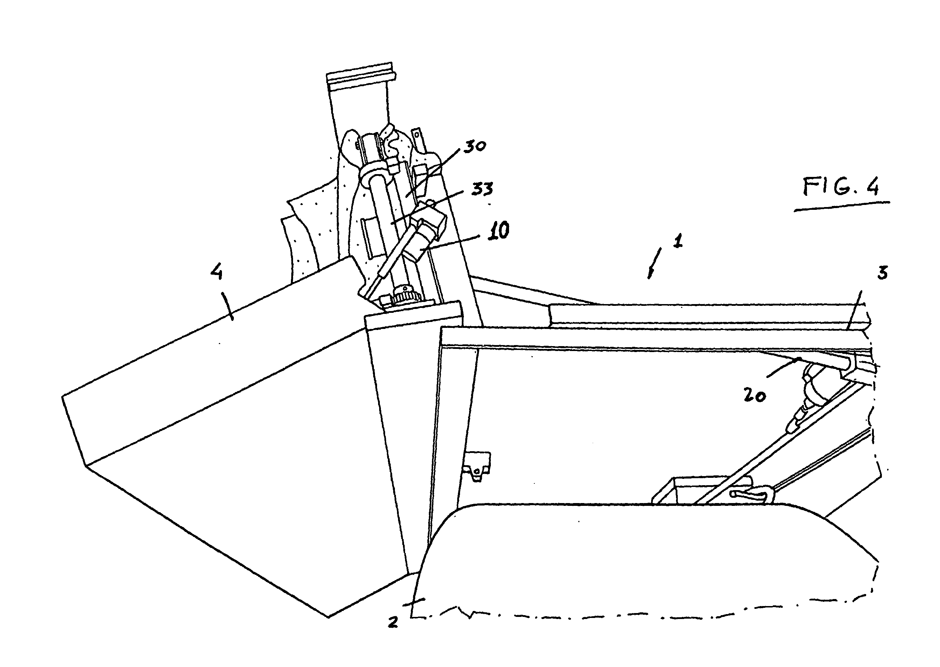

Figure 4 shows the box cover in an open position thereof;
Figure 5 shows the curtain opening operating step;
Figure 6 shows the outer control means for controlling, from the outside, the opening and closing of the curtain, to be used in an emergency condition;

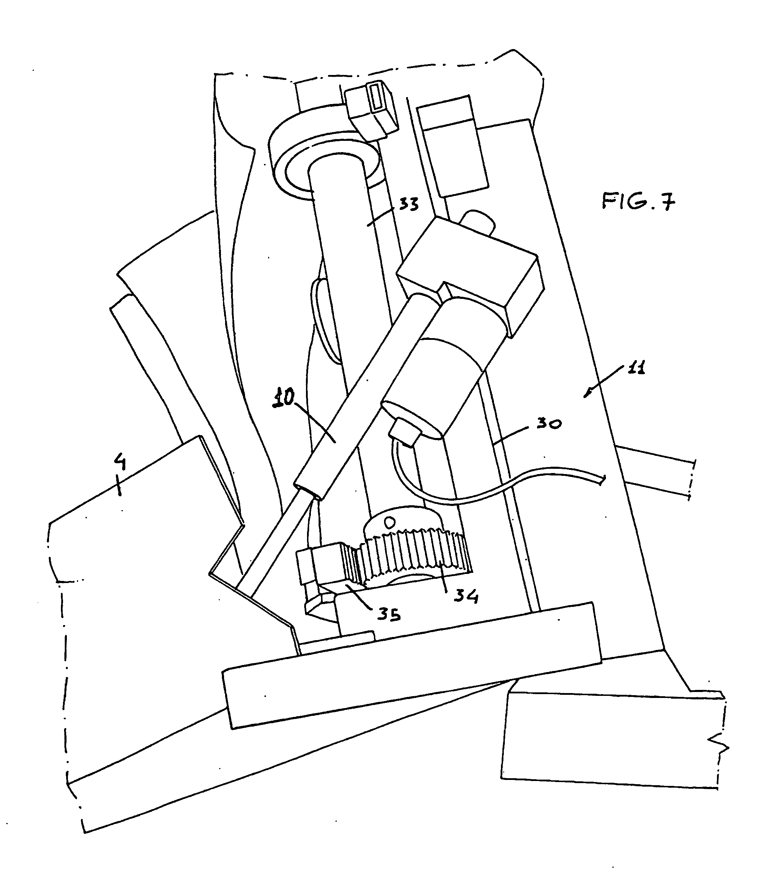

Figure 7 illustrates a rack-gear wheel coupling for performing the curtain opening movement;
Figure 8 is a schematic cross-sectional view illustrating the curtain extending means;
Figure 9 is a further schematic view illustrating an adjusting operating step for adjusting the curtain opening, to be used in an emergency condition;
Figure 10 is a further cross-sectional schematic view illustrating the adjusting means for adjusting or controlling the curtain opening, so as to change the front and rear width of said curtain;
Figure 11 shows the curtain box and control elements for controlling the raising of said curtain box, by coupling, through a flexible shaft, the two motors arranged at the end portions of the curtain box;
Figure 12 shows an electric motor having a motor shaft including a gripping element for a manual emergency operation and including moreover a shaft for coupling it to a flexible shaft for raising and lowering the curtain box, to be coupled with a flexible shaft;
Figure 13 shows a further view of that same actuator for raising and lowering the curtain box, which is shown in a cross-sectional view;
Figures 14 and 15 are, respectively, a side cross-sectioned view and a perspective view showing an actuator for raising the curtain box, having a spring, operating as a pushing aiding element, for reducing the operating power necessary for driving the curtain box as it is opened and closed; and
Figure 16 is a detail view of an further actuator designed for a pivot connection between the curtain body 11 and the cover 4.

### DESCRIPTION OF THE PREFERRED EMBODIMENTS

With reference to the number references of the above mentioned figures, the device for driving curtains, mounted on motor vehicles and the like, according to the present invention, comprises a curtain holding box, generally indicated by the reference number 1, which is coupled to a motor vehicle 2.

The curtain box 1 comprises a bottom element or frame 3, to which is pivoted a cover 4, allowing to house inside the curtain box 1 overturning means for overturning it, comprising one or more overturning or turning-over actuators 20, pivoted between the bottom element 3 and curtain body 11, which, in turn, is pivoted to a frame 3 which can be applied to the motor vehicle.

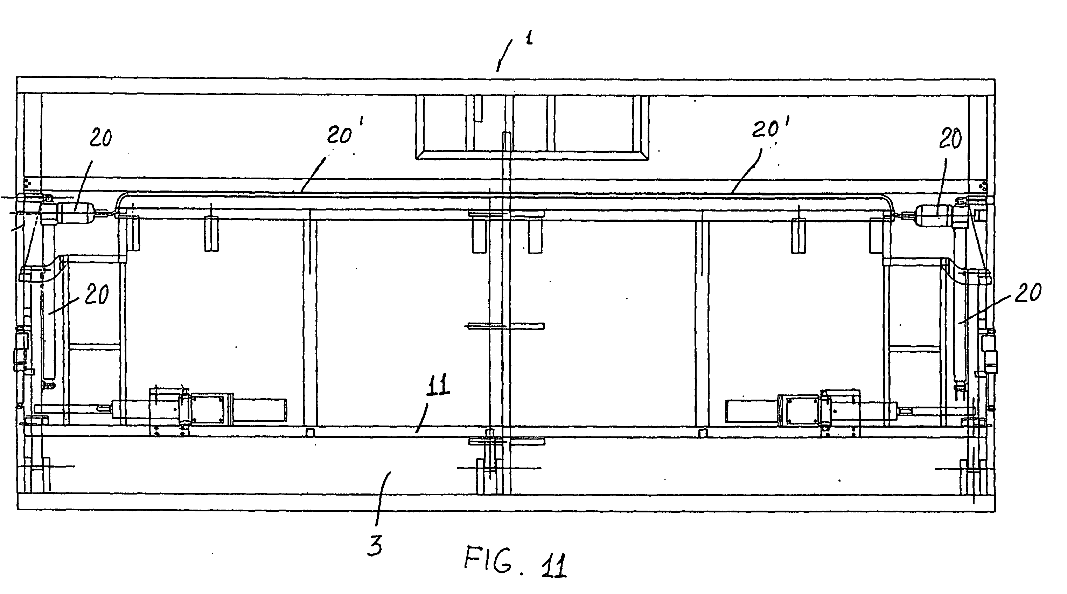

With reference to figure 11, are herein shown the two turning-over actuators 20, arranged at the opposite side end portions of the curtain box 1 and applied to the latter.

Said turning-over actuators 20 are mutually coupled by a flexible shaft 20' allowing to simultaneously drive the curtain box holding the curtain body 11 therein, even if one of the driving motors of the turning-over actuators 20 does not operate or is defective.

Alternatively, the two mentioned driving motors of the turning-over actuators 20 can be replaced by a single central motor, coupled to the raising actuators 20 through one or more transmission shafts 20', preferably flexible transmission shafts.

Figure 11 is a detail view showing the actuators 20 for overturning or turning over the curtain box and curtain body.

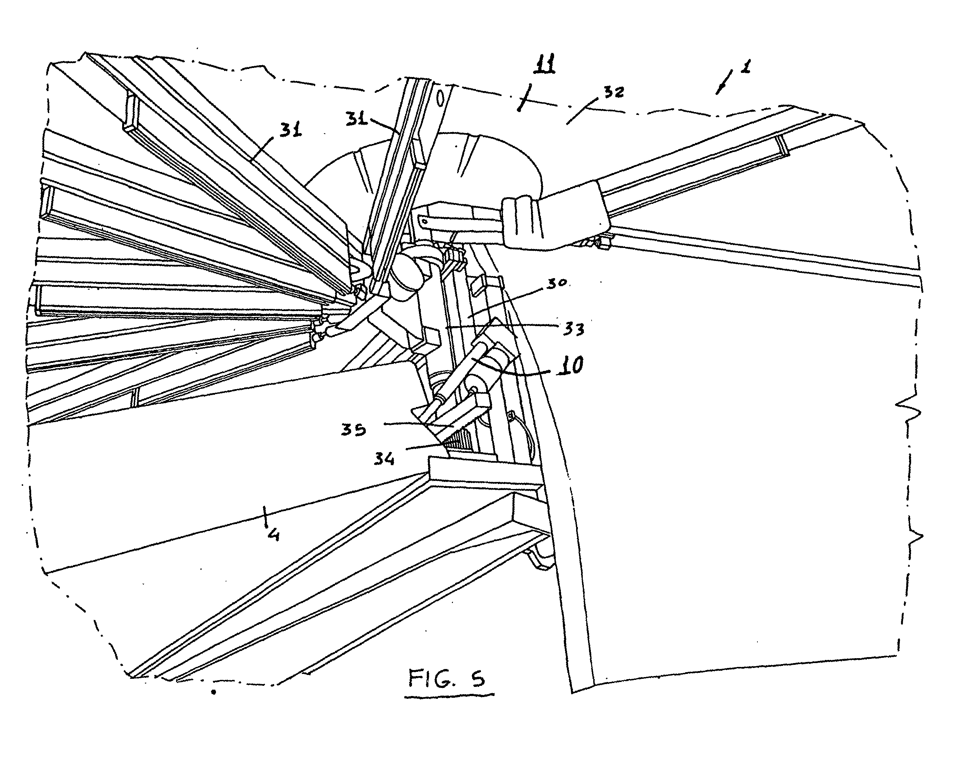

On the curtain body (see figure 5) are provided, at both end portions thereof, bearing constructions 30 for supporting fan arms 31 for coupling the curtain 32.

The fan arms 31 are in turn coupled to a curtain shaft 33, to which is moreover coupled a gear wheel 34 therewith curtain extending means cooperate.

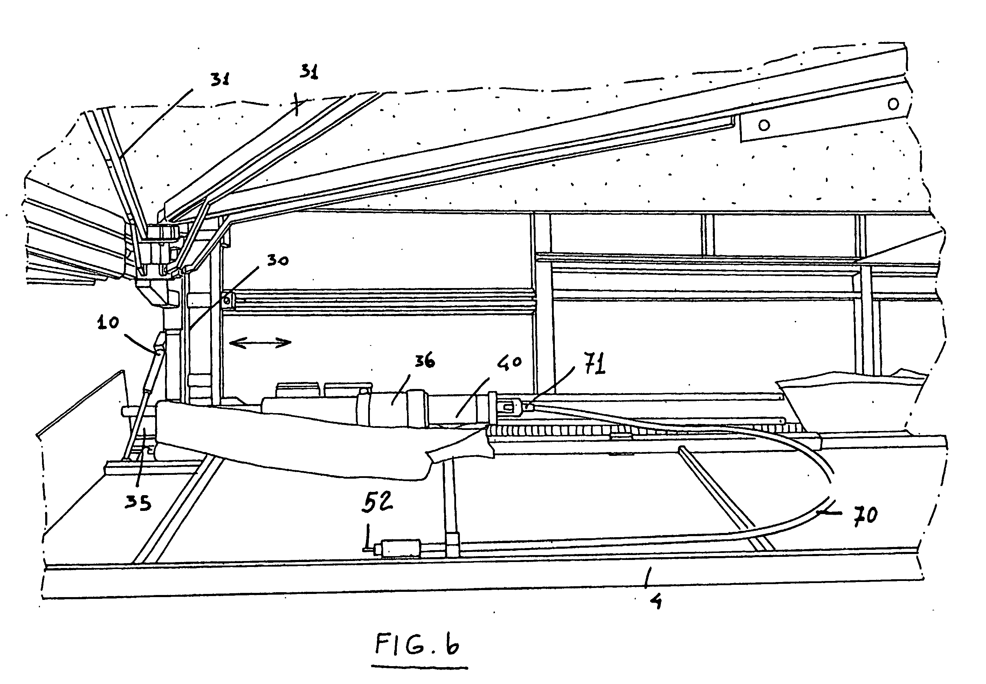

The curtain extending means comprise a rack 35 (see figure 6), driven by yet another actuator 36 allowing to translate the rack 35 and, accordingly, to open and close the curtain.

This actuator 36 comprises a motor 40 (see figures 5 and 6), which is provided with coupling elements 70 for coupling with an outer control device, which can also comprise a hand-held drilling device 51, provided with a built-in power supply accumulator.

This outer control device can also comprise a crank or other manually operated tool.

The coupling elements are connected by a flexible element 70 and a fitting 71 to an end-piece 52 of the motor 40 (see figure 6).

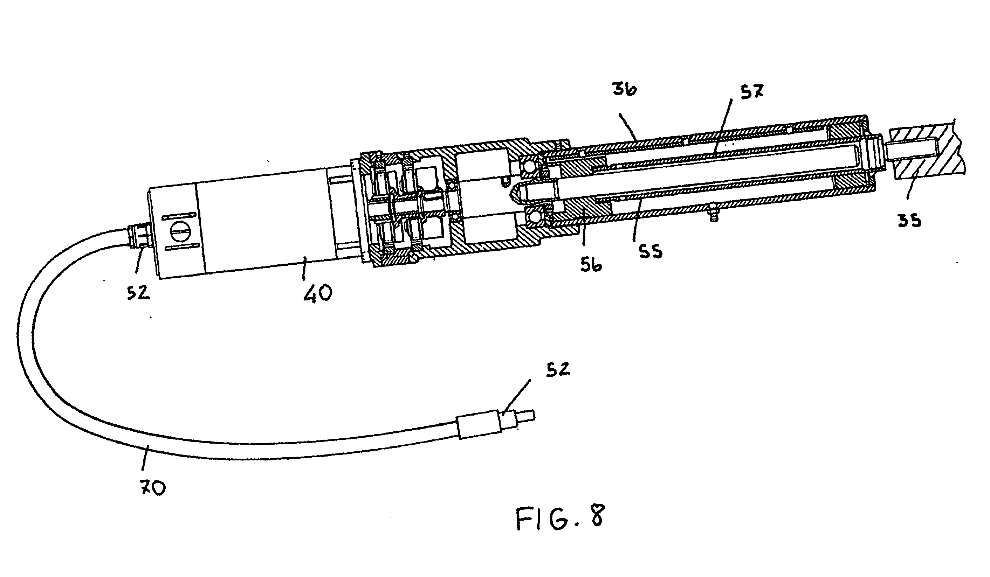

The end-piece 52, in a case of a failure of the motor, can be driven so as to rotatively drive (see figure 8) a screw 55 engaging with a bush 56 coupled to a stem 57 comprising a tubular element projecting from a cylinder 36.

Thus, it is possible to connect the drilling device or the like to the end portion of the tube or flexible fitting 70 (see figure 6), which is housed in the cover 4, in order to drive from the outside the opening and closing movement of the curtain, in a manual mode of operation.

In this connection it should be pointed out that the actuator 36 can be any desired suitable type of actuator with the screw, of a roller-ball-triangular or trapezoidal type and the like.

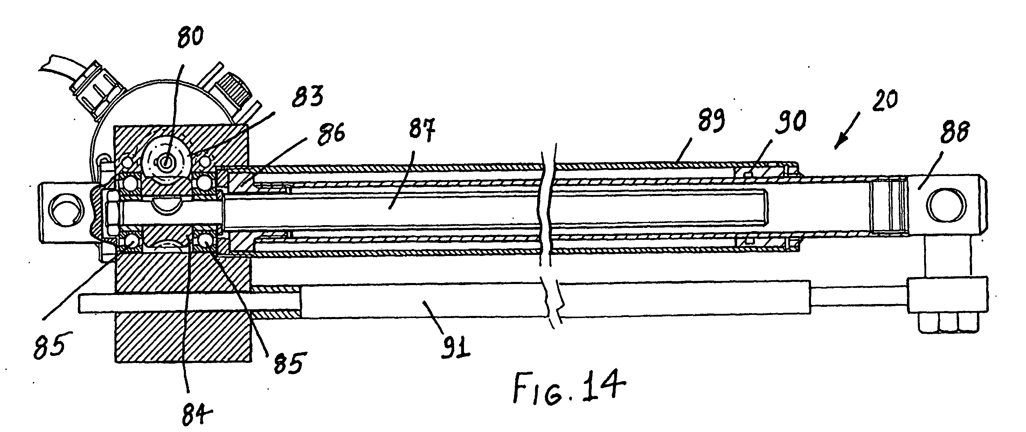

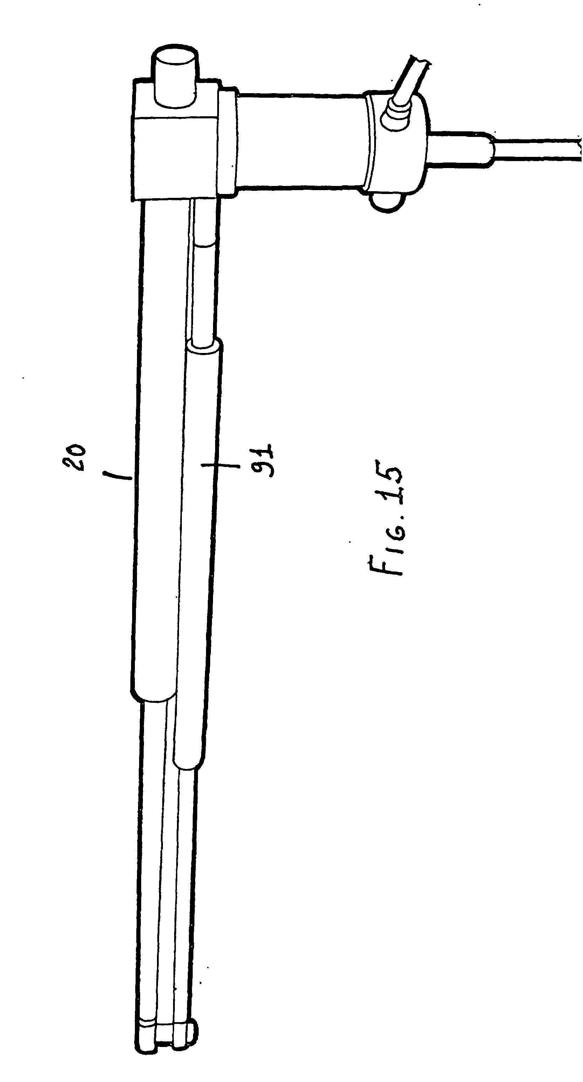

Figures 14 and 15 show an urging spring 91, which can be applied to the turning-over actuators 20 controlling the raising and lowering movements of the curtain box 1 and adapted to properly tilt the curtain box 1.

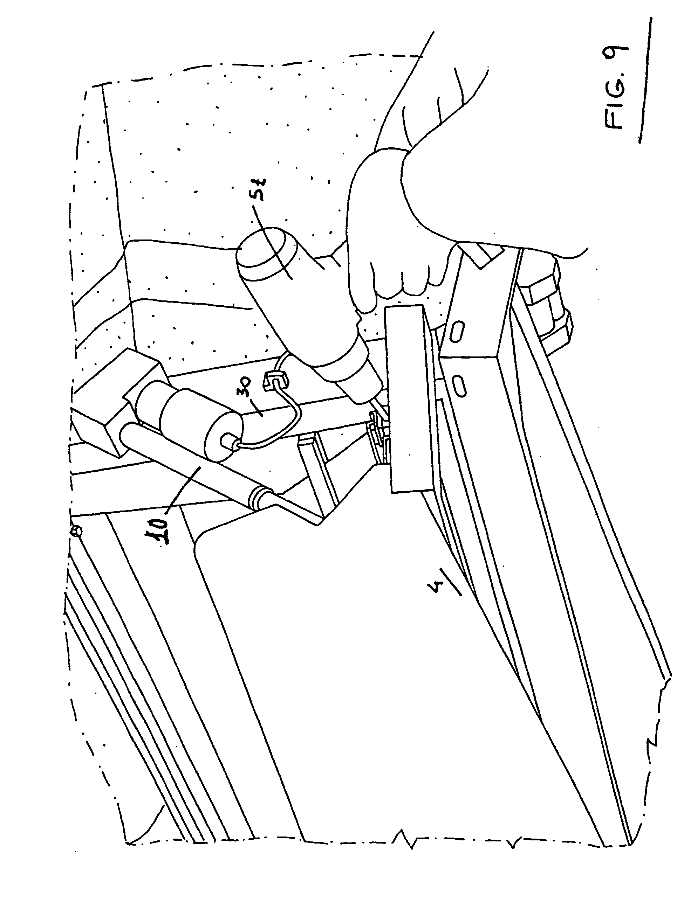

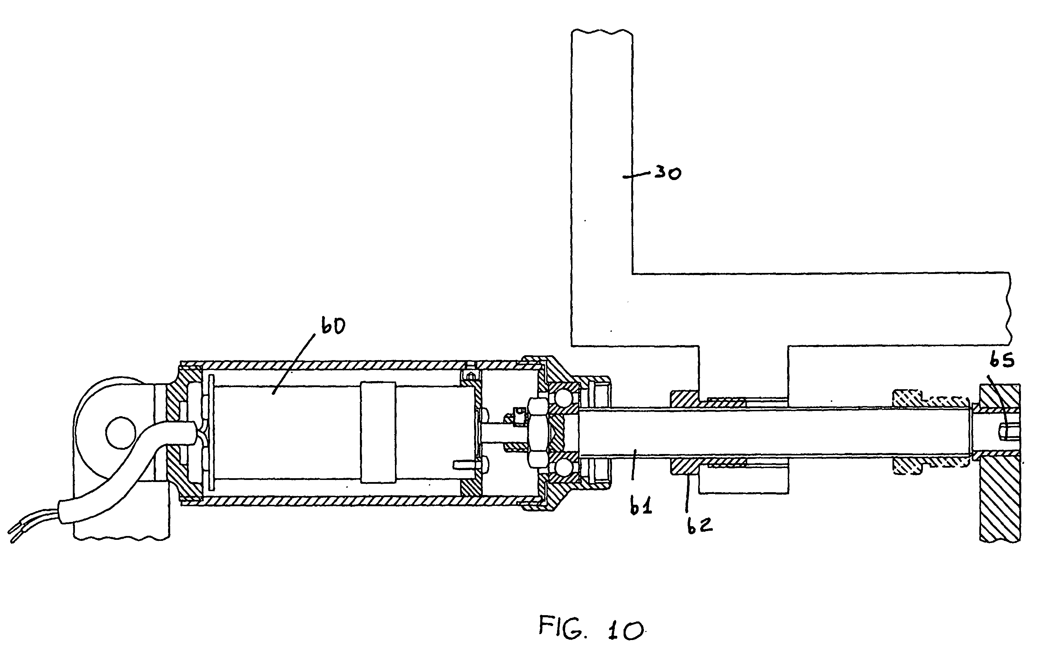

In order to adjust or control at will the extension of the curtain 11, adjusting means are provided for adjusting the longitudinal position of the curtain, which adjusting means are shown in figures 9 and 10 and practically comprise an adjusting motor 60 operating on a threaded bar 61 (of a roller-ball-trapezoidal-triangular type and so on) therewith is engaged a scroll 62 which in turn coupled to the curtain supporting frame 30, so as to adjust the position of the latter.

At one end portion of the threaded bar 61 (see figure 10) is provided a clutch element 65 for a recessed head wrench, which can be coupled to a hand held drilling device 51 or any other outer element, even of a manual type, allowing to operate the curtain bearing or supporting frame 30, thereby allowing the curtain to be sidewise displaced, owing to the engagement of the scroll 62, to be used in an emergency condition.

In this connection it should be pointed out that the connection of the hand-held drilling device 51 and motors for driving the elements for opening and closing the curtain are performed by flexible tubes, shafts or fittings.

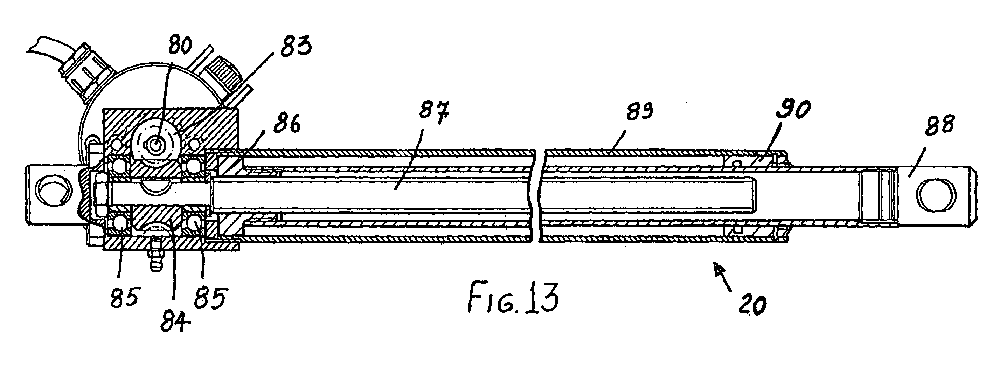

With reference to figures 11, 12, 13, 14 and 15, is herein shown a left turning-over actuator 20 for raising the curtain box 1 to be coupled, by a flexible shaft, to a right turning-over actuator 20.

From these figures, it would be apparent that they show an turning-over actuator 20 including a shaft 80 to be used for a manual emergency condition.

Said turning-over actuator 20 comprises a worm screw 83 engaging with an helicoidal gear wheel 84 supported by supporting bearings 85.

Said turning-over actuator 20 can be controlled either by an electric motor 81 or by an oleodynamic or pneumatic motor.

Said turning-over actuator 20 comprises, at one end portion thereof, a flexible shaft coupling the two actuators, respectively the right and left actuators

. From the above mentioned figures, it should be apparent that the above mentioned worm screw 83 engages with said helical gear wheel 84 which in turn is connected to a scroll 86 and a screw 87 controlling the inward and outward displacements of the rod 88, the extending and withdrawing movements thereof will cause the curtain box 1 to be raised and lowered respectively.

The screw (of a roller-ball-trapezoidal-triangular and so on type) 87 controlling the withdrawing movement of the rod 88 is encompassed by a guide tube 89, having bearings 90, therealong the rod 88 axially slide during its reciprocating rectilinear movement.

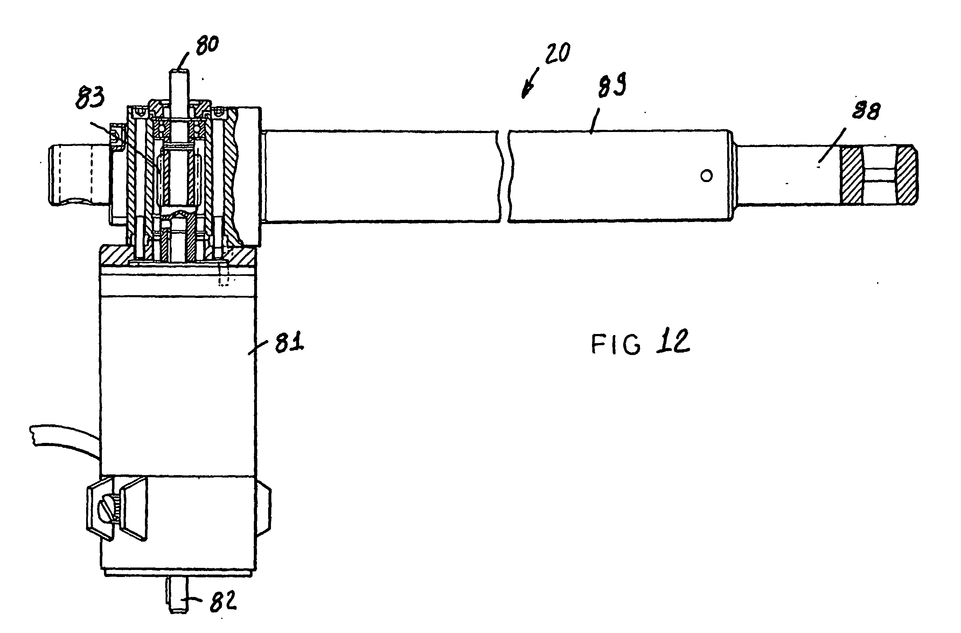

From figures 12, 13, 14 and 15, it should be apparent that, adjoining the turning-over actuator 20 for raising the curtain box 1, to be coupled to a second turning-over actuator 20 through a flexible shaft, a spring 91 is applied, for integrating the urging force, and the provision of which will facilitate the operating stroke of each turning-over actuator 20 during the raising and lowering operations of the curtain box 1.

Said spring 91, which represents an additional urging element, is arranged parallel to the turning-over actuator 20 and cooperates with the latter for raising and lowering the curtain box 1, so as to reduce, the power necessary for performing this operation.

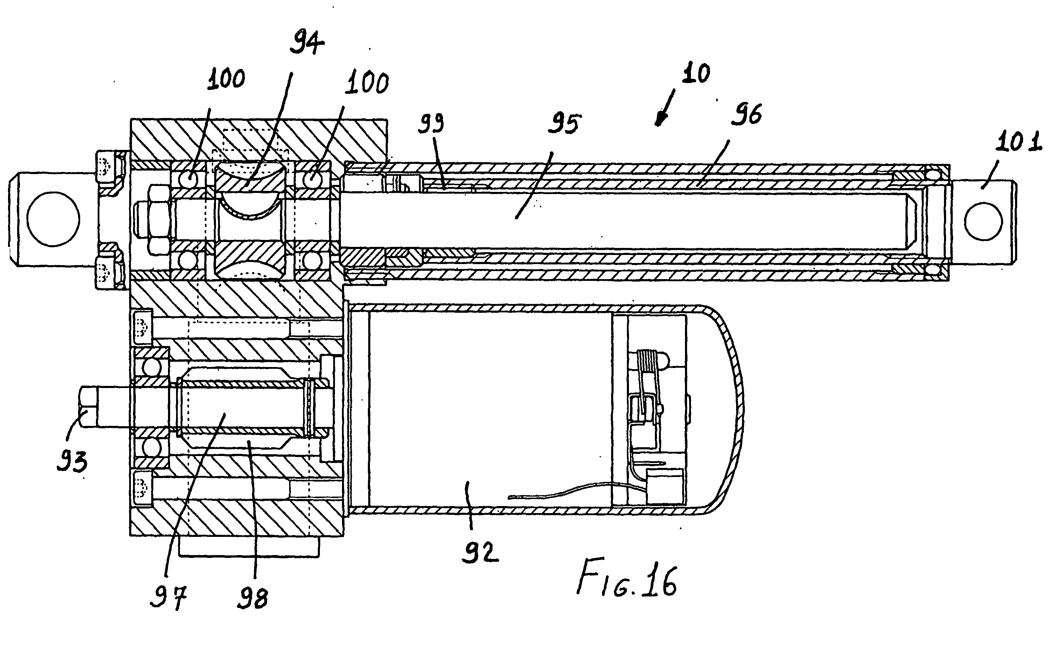

With reference to figure 16, it should be apparent that it is a detail view of a further actuator 10 for opening and closing the cover 4, pivoted between the curtain body 11 and the cover 4.

This turning over actuator comprises a driving motor 92, preferably an electric motor, operating a multi-stage worm screw reducing unit 97, therefrom an emergency shaft 93 projects.

The latter can be operated from the outside by manual operating tools or an electric tool comprising a drilling tool and battery assembly, to which a tool adapted to engage with the emergency shaft contour 93 can be applied.

As shown, the multi-stage worm reducing unit 97 is coupled to a helical screw or worm 94, which rotates and is supported by bearings 100.

This worm screw 94 drives a further screw 95 which causes the rod 101 to be axially inwardly and outwardly displaced.

The rod 101, in particular, is encompassed by a guide tube 96, which holds said rod 101 properly located so as to provide, as it is operated, a reciprocating rectilinear movement, by entering and exiting from said guide tube 96.

The screw for withdrawing the rod supports, in turn, a scroll 99.

From the above disclosure it should be apparent that the invention fully achieves the intended aim and objects.

In particular, the invention provides a driving device for driving curtains mounted on motor vehicles and the like which, at first, allows to operate the curtain from the outside, even by using manually operated tools and means, in an emergency condition.

The inventive device, moreover, allows to adjust at will, within comparatively broad ranges, the curtain opening region, thereby it can be easily fitted to all the contingent situations.

The actuator-spring coupling allows to reduce the control motor power, necessary for controlling the individual movements, thereby providing a great power saving, without requiring the use of an additional power supply battery.

The invention, as disclosed, is susceptible to several modifications and variations all of which will come within its scope.

Moreover, all the constructional details can be replaced by other technically equivalent elements.

The curtain driving means, in particular, can be selected from different types of driving means, i.e. they can comprise electric, hydraulic or pneumatic motors.

In practicing the invention, the used materials, as well as the contingent size and shapes, can be any, depending on requirements.

## Claims

1. A driving device for driving a curtain (32) mountable on a motor vehicle (2), comprising a curtain. holding box (1) for coupling to said motor vehicle and associated with means for turning over said curtain holding box (1) and housing therein means for opening a cover (4) of said box, and means for extending said curtain, adjusting means for adjusting the longitudinal position of said curtain (32), and driving elements for driving said adjusting means, through one or more outer control devices, said curtain box (1) having a bottom element or frame (3), to which is pivoted said cover (4) allowing to house, inside said curtain box (1), the means for turning over said box comprising one or more turning over actuators (20), pivoted between said bottom element (3) and a curtain body (11), and two further actuators (10) arranged at opposite side end portions of said curtain box (1), **characterized in that** said two turning-over actuators (20) are mutually coupled by a flexible shaft (20') allowing to be simultaneously driven, even in a case in which one at the driving motors (81) of said two turning-over actuators (20) does not operate or is defective.

2. A device according to claim 1, **characterized in that** said driving motors (81) of the two turning-over actuators (20) can be replaced by a single central motor.

3. A device according to claim 1, **characterized in that** said curtain body (11) has two end portions supporting bearing constructions (30) for supporting fan arms (31) for coupling with said curtain (32).

4. A device according to claim 3, **characterized in that** said fan arms (31) are coupled to a curtain shaft (33), to which is coupled a gear wheel (34) therewith curtain extending means cooperate.

5. A device according to claim 4, **characterized in that** said curtain extending means comprise a rack (35) driven by yet another actuator (36) allowing to translate said rack (35) to perform the opening and closing of the curtain (32).

6. A device according to claim 5, **characterized in that** said yet another actuator (36) comprises a motor (40) having coupling elements (70), for connection with an outer control device, including a hand-held drilling device (51) power supplied by a built-in storage accumulator.

7. A device according to claim 6, **characterized in that** said outer control device comprises a crank or other manual operating tool.

8. A device according to claim 6, **characterized in that** said coupling elements (70) are coupled by a flexible element and a fitting (71) to an end piece (50) of said motor (40) which, in a case of an operating failure, can be driven so as to turn a screw (55) engaging with a scroll (56) coupled to a rod (57) including a tubular element projecting from a cylinder (36).

9. A device according to claim 1, **characterized in that** said adjusting means comprises an adjusting motor (60) operating on a threaded bar (61), therewith is engaged a scroll (62) coupled to a curtain supporting frame (30).

10. A device according to claim 9, **characterized in that** said threaded bar (61) supports at one end thereof a clutch element (65) for a recessed head wrench to be coupled to a hand held drilling device (51) or any other outer element, even of a manual type, to operate said curtain bearing frame (30) for sidewise displacing said curtain, by engagement with said scroll (62).

11. A device according to claim 10, **characterized in that** said hand-held drilling device (51) is coupled by tubes, shafts or flexible fittings to curtain driving motor means.

12. A device according to claim 1, **characterized in that** said two turning-over actuators (20) comprise a first left actuator (20) for raising the curtain box (1) which is coupled, through the flexible shaft (20') to a second right actuator (20).

13. A device according to claim 1, **characterized in that** said turning-over actuators (20) comprise an actuator (20) including a shaft (80) for operating in an emergency condition and including a worm screw (83) engaging with a helicoidal gear wheel (84) supported by bearings (85).

14. A device according to claims 1 and 13, **characterized in that** said helicoidal gear wheel (84) is coupled to a scroll (86) driving a rod (88) for raising and lowering said curtain box (1).

15. A device according to claim 14, **characterized in that** said scroll (86) is encompassed by a guide tube (89) having bearings (84) therealong axially slides said rod (88).

16. A device according to claim 1, **characterized in that** said further actuators (10) comprise a driving motor (92) driving a multi-stage screw reducing unit (97) therefrom an emergency shaft (93) projects.

17. A device according to claim 16, **characterized in that** said emergency shaft (93) can be driven from the outside by manual or electric tools.

18. A device according to claim 16, **characterized in that** said reducing unit (97) is coupled to a helical screw (94) which is rotatively supported by bearings (100), and operatively coupled to a further driving screw (95).

## Patentansprüche

1. Antriebsvorrichtung zum Antreiben eines Vorhangs (32), der auf einem Kraftfahrzeug (2) befestigt werden kann, umfassend einen Vorhanghaltekasten (1) für das Koppeln mit dem Kraftfahrzeug, und der mit Mitteln zum Umklappen des Vorhanghaltekastens (1) verbunden ist, und darin Mittel, um eine Abdeckung (4) des Kastens zu öffnen, und Mittel zum Ausziehen des Vorhangs, Einstellmittel, um die Längsposition des Vorhangs (32) einzustellen, und Antriebselemente zum Antrieb der Einstellmittel durch einen oder mehrere äußere Stellantriebe unterbringt, wobei der Vorhangkasten (1) ein Bodenelement oder einen Rahmen (3) aufweist, mit dem die Abdeckung (4) schwenkbar verbunden ist, wobei ermöglicht wird, die Mittel zum Umklappen des Kastens in dem Vorhangkasten (1) unterzubringen, wobei die Mittel ein Umklappstellglied oder mehrere Umklappstellglieder (20), die zwischen dem Bodenelement (3) und einem Vorhangaufbau (11) schwenkbar sind, und zwei weitere Stellglieder (10) umfassen, die an gegenüberliegenden Seitenendabschnitten des Vorhangkastens (1) angeordnet sind, **dadurch gekennzeichnet, dass** die zwei Umklappstellglieder (20) durch eine biegsame Welle (20') miteinander verbunden sind, was ermöglicht, dass die Umklappstellglieder sogar in einem Fall gleichzeitig angetrieben werden, in dem einer der Antriebsmotoren (81) der zwei Umklappstellglieder (20) nicht läuft oder defekt ist.

2. Vorrichtung nach Anspruch 1, **dadurch gekennzeichnet, dass** die Antriebsmotoren (81) an den zwei Umklappstellgliedern (20) durch einen einzigen Zentralmotor ersetzt werden können.

3. Vorrichtung nach Anspruch 1, **dadurch gekennzeichnet, dass** der Vorhangaufbau (11) zwei Endabschnitte aufweist, die Tragkonstruktionen (30) zum Tragen von Fächerarmen (31) für das Koppeln mit dem Vorhang (32) tragen.

4. Vorrichtung nach Anspruch 3, **dadurch gekennzeichnet, dass** die Fächerarme (31) mit einer Vorhangwelle (33) gekoppelt sind, mit der ein Zahnrad (34), mit dem Vorhangausziehmittel zusammenwirken, gekoppelt ist.

5. Vorrichtung nach Anspruch 4, **dadurch gekennzeichnet, dass** die Vorhangausziehmittel eine Zahnstange (35) umfassen, die durch ein nochmals weiteres Stellglied (36) angetrieben wird, wodurch die Zahnstange (35) verschoben werden kann, um das Öffnen und das Schließen des Vorhangs (32) auszuführen.

6. Vorrichtung nach Anspruch 5, **dadurch gekennzeichnet, dass** das nochmals weitere Stellglied (36) einen Motor (40) umfasst, der Kopplungselemente (70) für die Verbindung mit einem äußeren Stellantrieb, einschließlich einer Handbohrmaschine (51), die von einem eingebauten Akkumulator mit Energie versorgt wird, aufweist.

7. Vorrichtung nach Anspruch 6, **dadurch gekennzeichnet, dass** der äußere Stellantrieb eine Kurbel oder anderes manuelles Betriebswerkzeug umfasst.

8. Vorrichtung nach Anspruch 6, **dadurch gekennzeichnet, dass** die Kopplungselemente (70) durch ein biegsames Element und ein Anschlussstück (71) mit einem Kopfende (50) des Motors (40) gekoppelt sind, der im Fall eines Betriebsausfalls angetrieben werden kann, um eine Spindel (55) zu drehen, die mit einer Gewindemutter (56), die mit einer Stange (57) gekoppelt ist, die ein röhrenförmiges Element umfasst, das aus einem Zylinder (36) vorsteht, in Eingriff ist.

9. Vorrichtung nach Anspruch 1, **dadurch gekennzeichnet, dass** die Einstellmittel einen Verstellmotor (60) umfassen, der an einer Gewindestange (61) betrieben wird, mit der eine Gewindemutter (62), die mit einem Vorhangtragrahmen (30) gekoppelt ist, in Eingriff ist.

10. Vorrichtung nach Anspruch 9, **dadurch gekennzeichnet, dass** die Gewindestange (61) an einem ihrer Enden ein Kupplungselement (65) aufnimmt, damit ein Innensteckkopf mit einer Handbohrmaschine (51) oder mit irgendeinem anderen Außenelement, sogar von einer manuellen Art, gekoppelt wird, um durch den Eingriff mit der Gewindemutter (62) den Vorhangtragrahmen (30) anzutreiben, um den Vorhang seitlich zu verschieben.

11. Vorrichtung nach Anspruch 10, **dadurch gekennzeichnet, dass** die Handbohrmaschine (51) durch Röhren, Wellen oder flexible Anschlussstücke mit den Vorhangantriebsmotormitteln gekoppelt ist.

12. Vorrichtung nach Anspruch 1, **dadurch gekennzeichnet, dass** die zwei Umklappstellglieder (20) ein erstes linkes Stellglied (20) zum Hochziehen des Vorhangkastens (1) umfassen, das durch die biegsame Welle (20') mit einem zweiten rechten Stellglied (20) gekoppelt ist.

13. Vorrichtung nach Anspruch 1, **dadurch gekennzeichnet, dass** die Umklappstellglieder (20) ein Stellglied (20) umfassen, das eine Welle (80) für den Betrieb in einen Störfall und eine Schnecke (83) enthält, die mit einem schneckenförmigen Zahnrad (84), das durch Lager (85) getragen wird, in Eingriff ist.

14. Vorrichtung nach den Ansprüchen 1 und 13, **dadurch gekennzeichnet, dass** das schneckenförmige Zahnrad (84) mit einer Gewindemutter (86) gekoppelt ist, die eine Stange (88) für das Anheben und das Absenken des Vorhangkastens (1) antreibt.

15. Vorrichtung nach Anspruch 14, **dadurch gekennzeichnet, dass** die Gewindemutter (86) von einem Führungsrohr (89) mit Lagern (84) umgeben ist, in dem die Stange (88) axial entlang gleitet.

16. Vorrichtung nach Anspruch 1, **dadurch gekennzeichnet, dass** weitere Stellglieder (10) einen Antriebsmotor (92) umfassen, der eine mehrstufige Spindeluntersetzungseinheit (97) antreibt, aus der eine Notfallwelle (93) vorsteht.

17. Vorrichtung nach Anspruch 16, **dadurch gekennzeichnet, dass** die Notfallwelle (93) durch manuelle oder elektrische Werkzeuge von der Außenseite angetrieben werden kann.

18. Vorrichtung nach Anspruch 16, **dadurch gekennzeichnet, dass** die Untersetzungseinheit (97) mit einer schneckenförmigen Spindel (94) gekoppelt ist, die durch Lager (100) drehbar gelagert und mit einer weiteren Antriebsspindel (95) funktional gekoppelt ist.

## Revendications

1. Un dispositif d'entraînement pour entraîner un rideau (32) pouvant être monté sur un véhicule à moteur (2), comprenant une boîte de maintien de rideau (1) pour un couplage audit véhicule à moteur et associée à des moyens pour retourner ladite boîte de maintien de rideau (1) et loger à l'intérieur des moyens pour ouvrir un couvercle (4) de ladite boîte, et des moyens pour étendre ledit rideau, des moyens d'ajustage pour ajuster la position longitudinale dudit rideau (32), et des éléments d'entraînement pour entraîner lesdits moyens d'ajustage, par l'intermédiaire d'un ou plusieurs dispositifs de commande extérieurs, ladite boîte à rideau (1) ayant un élément inférieur ou cadre (3), sur lequel est articulé, ledit couvercle (4) permettant de loger, à l'intérieur de ladite boîte à rideau (1), les moyens pour retourner ladite boîte comprenant un ou plusieurs organes d'actionnement de retournement (20), articulés entre ledit élément inférieur (3) et un corps de rideau (11), et deux autres organes d'actionnement (10) disposés à des parties d'extrémité opposées de ladite boîte à rideau (1), **caractérisé en ce que** lesdits deux organes d'actionnement de retournement (20) sont mutuellement couplés par un arbre flexible (20') leur permettant d'être simultanément entraînés, même dans le cas où l'un des moteurs d'entraînement (81) desdits deux organes d'actionnement de retournement (20) ne fonctionne pas ou est défectueux.

2. Un dispositif selon la revendication 1, **caractérisé en ce que** lesdits moteurs d'entraînement (81) des deux organes d'actionnement de retournement (20) peuvent être remplacés par un seul moteur central.

3. Un dispositif selon la revendication 1, **caractérisé en ce que** ledit corps de rideau (11) comporte deux structures d'appui de support de parties d'extrémité (30) pour supporter des bras en éventail (31) pour un couplage avec ledit rideau (32).

4. Un dispositif selon la revendication 3, **caractérisé en ce que** lesdits bras en éventail (31) sont couplés à un arbre de rideau (33), auquel est couplée une roue d'engrenage (34) avec laquelle des moyens d'extension de rideau coopèrent.

5. Un dispositif selon la revendication 4, **caractérisé en ce que** lesdits moyens d'extension de rideau comprennent une crémaillère (35) entraînée par encore un autre organe d'actionnement (36) permettant de déplacer ladite crémaillère (35) pour réaliser l'ouverture et la fermeture du rideau (32).

6. Un dispositif selon la revendication 5, **caractérisé en ce que** ledit encore un autre organe d'actionnement (36) comprend un moteur (40) ayant des éléments de couplage (70), pour une liaison avec un dispositif de commande extérieur, comprenant un dispositif d'entraînement en rotation portatif (51) alimenté par un accumulateur de stockage incorporé.

7. Un dispositif selon la revendication 6, **caractérisé en ce que** ledit dispositif de commande extérieur comprend une manivelle ou un autre outil d'actionnement manuel.

8. Un dispositif selon la revendication 6, **caractérisé en ce que** lesdits éléments de couplage (70) sont couplés par un élément flexible et un raccord (71) à une pièce d'extrémité (50) dudit moteur (40), qui, en cas de panne, peut être entraînée de façon à faire tourner une vis (55) en prise avec un écrou de défilement (56) couplé à une tige (57) comprenant un élément tubulaire faisant saillie depuis un cylindre (36).

9. Un dispositif selon la revendication 1, **caractérisé en ce que** lesdits moyens d'ajustage comprennent un moteur d'ajustement (60) fonctionnant sur une barre filetée (61), avec laquelle un écrou de défilement (62) est en prise, couplé à un cadre de support de rideau (30).

10. Un dispositif selon la revendication 9, **caractérisé en ce que** ladite barre filetée (61) supporte à une de ses extrémités un élément de fixation (65) pour coupler une clé à tête creuse à un dispositif d'entraînement en rotation portatif (51) ou tout autre élément extérieur, même de type manuel, pour actionner ledit cadre d'appui de rideau (30) pour un déplacement latéral dudit rideau, par venue en prise avec ledit écrou de défilement (62).

11. Un dispositif selon la revendication 10, **caractérisé en ce que** ledit dispositif d'entraînement en rotation portatif (51) est couplé par des tubes, arbres ou raccords flexibles à des moyens formant moteur d'entraînement de rideau.

12. Un dispositif selon la revendication 1, **caractérisé en ce que** lesdits deux organes d'actionnement de retournement (20) comprennent un premier organe d'actionnement gauche (20) pour soulever ladite boîte à rideau (1) lequel est couplé, par l'intermédiaire de l'arbre flexible (20'), à un deuxième organe d'actionnement droit (20).

13. Un dispositif selon la revendication 1, **caractérisé en ce que** lesdits organes d'actionnement de retournement (20) comprennent un organe d'actionnement (20) comprenant un arbre (80) destiné à fonctionner en cas de détresse et comprenant une vis sans fin (83) venant en prise avec une roue d'engrenage hélicoïdale (84) supportée par des roulements à billes (85).

14. Un dispositif selon les revendications 1 et 13, **caractérisé en ce que** ladite roue d'engrenage hélicoïdale (84) est couplée à un écrou de défilement (86) entraînant une tige (88) pour soulever et rabaisser ladite boîte à rideau (1).

15. Un dispositif selon la revendication 14, **caractérisé en ce que** ledit écrou de défilement (86) est entouré par un tube de guidage (89) ayant des paliers (84) le long desquels glisse axialement ladite tige (88).

16. Un dispositif selon la revendication 1, **caractérisé en ce que** lesdits autres organes d'actionnement (10) comprennent un moteur d'entraînement (92) entraînant une unité de réduction à vis à plusieurs étages (97) à partir de laquelle un arbre de secours (93) fait saillie.

17. Un dispositif selon la revendication 16, **caractérisé en ce que** ledit arbre de secours (93) peut être entraîné depuis l'extérieur par des outils manuels ou électriques.

18. Un dispositif selon la revendication 16, **caractérisé en ce que** ladite unité de réduction (97) est couplée à une vis hélicoïdale (94) qui est supportée en rotation par des roulements à billes (100), et couplée fonctionnellement à une autre vis d'entraînement (95).
